# EUROPÄISCHE PATENTSCHRIFT

(11) **EP 1 769 951 B1**
(45) Veröffentlichungstag und Bekanntmachung des Hinweises auf die Patenterteilung: **03.03.2010**
(21) Anmeldenummer: 05021363.6
(22) Anmeldetag: 30.09.2005
(51) Int. Cl.: B60G 17/056, B60N 2/52

(54) **Anordnung und Kabinenfederung**
Arrangement and cab suspension
Arrangement et suspension pour cabine

(43) Veröffentlichungstag der Anmeldung: 04.04.2007
(73) Patentinhaber: Carl Freudenberg KG, 69469 Weinheim (DE)
(72) Erfinder: Luxem, Andreas, 56333 Winningen (DE); Käsler, Richard, Dr., 53424 Remagen (DE)

(56) Entgegenhaltungen:
- EP-A- 1 186 467
- DE-A1- 3 742 883
- DE-A1- 4 221 126
- US-A1- 2002 074 197
- US-B1- 6 619 728
- PATENT ABSTRACTS OF JAPAN Bd. 1995, Nr. 03, 28. April 1995 (1995-04-28) & JP 06 340212 A (HITACHI CONSTR MACH CO LTD), 13. Dezember 1994 (1994-12-13)

## Beschreibung

### Technisches Gebiet

Die Erfindung betrifft eine Anordnung gemäß dem Oberbegriff des Patentanspruchs 1.

### Stand der Technik

Derartige Anordnungen sind aus dem Stand der Technik bereits bekannt und finden in Kraftfahrzeugen verschiedenster Art Verwendung. Aus der DE 43 08 460 A1 ist beispielsweise eine Anordnung bekannt, die der Achsfederung dient. Bei dieser Anordnung kann die Fluidverbindung zwischen einer Zylindereinheit und dem Druckspeicher durch Sperrventile unterbrochen werden. In einer Sperrstellung setzen die Sperrventile die Achsfederung vollständig außer Funktion. Die DE 42 21 126 A1 und die JP 0634 0212 A zeigen Anordnungen, bei denen dem Kolbenraum ein dynamisches Drosselelement zugeordnet ist. US 2002/0074197 A1 offenbart eine Zylindereinheit, bei welcher der Kolbenraum unmittelbar mit einem Druckspeicher verbunden ist. EP 1 186 467 A1 und DE 37 42 883 A1 offenbaren Anordnungen, welche mehrere Ventile aufweisen und einen komplexen Aufbau zeigen.

Die aus dem Stand der Technik bekannten Anordnungen sind nur wenig geeignet, Dämpfungs- und Federungsvorgänge in Kraftfahrzeugen an unterschiedliche Be- und Entlastungsvorgänge anzupassen.

### Darstellung der Erfindung

Der Erfindung liegt daher die Aufgabe zugrunde, ein System zur Dämpfung und Federung von Massen zu schaffen, welches bei konstruktiv einfachem Aufbau an unterschiedliche Betriebsbedingungen problemlos anpassbar ist.

Die vorliegende Erfindung löst die zuvor genannte Aufgabe durch die Merkmale des Patentanspruchs 1. Danach ist die eingangs genannte Anordnung **dadurch gekennzeichnet, dass** die Proportionalventile oder Schaltventile als 4/2-WegeVentile ausgestaltet sind und der Stangenraum und der Kolbenraum durch eine einzige Einrichtung miteinander und mit dem Druckspeicher fluidleitend verbindbar sind.

Erfindungsgemäß ist erkannt worden, dass ein kontinuierlich einstellbarer Volumenstrom erlaubt, sowohl die Menge an transportiertem Fluid als auch die Geschwindigkeit, mit der eine definierte Menge an Fluid transportiert wird, einzustellen. Dabei ist auch denkbar, den Volumenstrom stufenweise einzustellen. Durch Einstellung eines sehr großen Volumenstroms kann ein geringes Dämpfungsverhalten der Zylindereinheit realisiert werden. Genauso ist es durch die erfindungsgemäße Ausgestaltung möglich, ein sehr träges und steifes Dämpfungs- und Federungssystem zu realisieren, indem nämlich der Volumenstrom sehr klein gewählt wird. Durch diese Maßnahmen ist es möglich, eine Zylindereinheit im Hinblick auf ihre Dämpfungseigenschaften kontinuierlich durchzustimmen und somit ein System zu schaffen, welches auf unterschiedliche Be- und Entlastungsvorgänge problemlos abstimmbar ist.

Mindestens eine Einrichtung umfasst dynamische Drosselelemente oder ist als dynamisches Drosselelement ausgestaltet. Dynamische Drosselelemente zeichnen sich dadurch aus, dass sie die Geometrie ihrer Fluiddurchgänge in Abhängigkeit von der Zeit oder anderer Parameter wie Druckbelastung verändern können. So ist es möglich, mit einem dynamischen Drosselelement einen Durchgang definierter Querschnittsfläche zu schaffen, welche sich abhängig von bestimmten Parametern verändert. Die dynamischen Drosselelemente sind als Proportionalventile oder Schaltventile ausgestaltet. Proportionalventile zeichnen sich dadurch aus, dass die Querschnittsflächen ihrer Fluiddurchgänge kontinuierlich vergrößerbar oder verkleinerbar sind. Vor diesem Hintergrund könnten die Proportionalventile als Schieberventile ausgestaltet sein. Schaltventile erlauben durch schnelle Taktvorgänge die Herstellung oder das Verschließen einer Fluidverbindung. Durch Wahl einer bestimmten Taktfrequenz kann ebenfalls ein kontinuierlich einstellbarer Volumenstrom realisiert werden, indem nämlich pro Zeiteinheit ein definiertes Volumen transportiert wird. Die Schaltventile könnten ebenfalls als Schieberventile ausgestaltet sein.

Die Proportionalventile oder Schaltventile sind als 4/2-Wege-Ventile ausgestaltet. 4/2-Wege-Ventile sind dann von Vorteil, wenn eine Freigabe oder ein Verschließen zweier Leitungen allein durch ein einziges Bauteil ermöglicht werden soll. Hierbei erfolgt das Verschließen oder Freigeben zweier Leitungen zugleich, so dass eine kontinuierliche zeitgleiche Veränderung der Querschnittsflächen der Leitungen realisierbar ist. Die Zylindereinheit umfasst mindestens einen Zylinder mit einem Stangenraum und einem Kolbenraum. Diese Ausgestaltung erlaubt die Aufnahme großer Lasten. Ganz in Abhängigkeit von der Größe der zu federnden Lasten können die Kolbenstange, der Stangenraum und der Kolbenraum geeignet dimensioniert werden. Des Weiteren kann mit einer solchen Zylindereinheit eine Höhenverstellung der zu federnden Lasten auf einfache Weise realisiert werden, indem die Zylindereinheit mit einer Einrichtung zur Niveauregulierung gekoppelt wird. Vor diesem Hintergrund ist auch denkbar, dass zwei Zylindereinheiten zur Aufnahme großer Lasten über eine einzige Einrichtung mit einem oder zwei Druckspeichern verbunden sind.
Der Stangenraum und der Kolbenraum sind durch eine einzige Einrichtung miteinander und mit dem Druckspeicher fluidleitend verbindbar. Diese Ausgestaltung erlaubt einen besonders kompakten und robusten Aufbau der Anordnung. Vor diesem Hintergrund könnten auch die Stangenräume und Kolbenräume mehrerer Zylindereinheiten durch eine Einrichtung miteinander und/ oder mit mehreren Druckspeichern fluidleitend verbindbar sein.

Folglich ist die eingangs genannte Aufgabe gelöst.

Schieberventile zeichnen sich durch eine große Robustheit aus und sind kommerziell in einfacher Weise erhältlich. Darüber hinaus sind sie wenig störanfällig, da sie auf Grund einer Federkraftbeaufschlagung stets automatisch in eine Schließ- oder Öffnungsposition zurückgeführt werden können. Bei Verwendung eines solchen Ventils kann ein Elektromagnet verwendet werden, welcher einen Schieber im Ventil zur Herstellung einer Schließ- oder Öffnungsstellung an sich heranzieht. Bei Ausschalten des Elektromagneten wird der Schieber automatisch in seine Ausgangsposition zurückgeführt.

Die eingangs genannte Aufgabe wird des Weiteren mit den Merkmalen des Patentanspruchs 2 gelöst.

Um Wiederholungen in Bezug auf die erfinderische Tätigkeit zu vermeiden, sei auf die Ausführung zur Anordnung als solcher verwiesen.

Kabinen dienen dem Transport von Kraftfahrzeugführem und weiteren Personen und bedürfen daher zur Herstellung eines gewissen Bedien- und Fahrkomforts eines betriebstauglichen Dämpfungs- und Federungssystems.

Vor diesem Hintergrund ist auch die Verwendung der Anordnung in einem Fahrwerkssystem eines Kraftfahrzeugs denkbar.

Es gibt nun verschiedene Möglichkeiten, die Lehre der vorliegenden Erfindung auf vorteilhafte Weise auszugestalten und weiterzubilden. Dazu ist einerseits auf die nachgeordneten Ansprüche, andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert.

### Kurzbeschreibung der Zeichnung

In der Zeichnung zeigen
- Fig. 1: eine Anordnung mit einem 4/2-Wege-Ventil,
- Fig. 2: eine nicht erfindungsgemäße Anordnung mit einem statischen Drosselelement,
- Fig. 3: eine nicht erfindungsgemäße Anordnung mit zwei 2/2-Wege-Ventilen und
- Fig. 4: eine Anordnung mit zwei Zylindereinheiten und zwei Druckspeichern.

### Ausführung der Erfindung

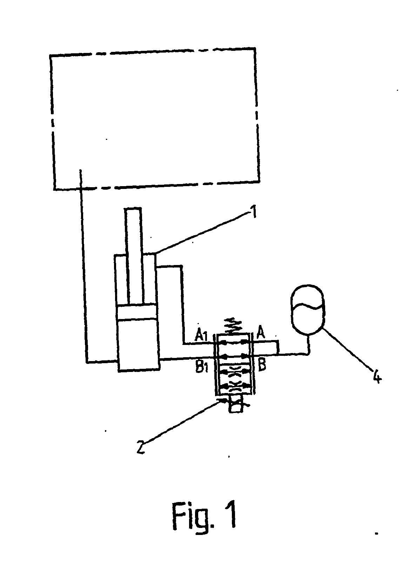

Fig. 1 zeigt eine Anordnung mit einer Zylindereinheit 1 und einem Druckspeicher 4. Zwischen Zylindereinheit 1 und Druckspeicher 4 ist eine Einrichtung 2 positioniert. Bei Zylinderbewegungen fließt ein Volumenstrom über die Einrichtung 2 zwischen der Zylindereinheit 1 und dem Druckspeicher 4. Der Volumenstrom des Fluids ist kontinuierlich einstellbar.

Die Einrichtung 2 ist als dynamisches Drosselelement, nämlich als 4/2-Wege-Ventil ausgestaltet. Der Stangenraum und der Kolbenraum sind über jeweils eine Leitung mit der Einrichtung 2 verbunden.

Wenn der Kolben innerhalb des Zylinders nach unten verfahren wird, wird Fluid aus dem Kolbenraum in die Schnittstelle B1 der Einrichtung 2 gefördert. Dieses Fluid tritt an der Schnittstelle B wieder aus und kann über die Schnittstelle A bzw. A1 wieder in den Stangenraum eindringen. Eine geringe Fluidmenge, nämlich die, die dem Volumen eines während des Verfahrens des Kolbens eingefahrenen Stangenabschnitts entspricht, kann zum Druckspeicher 4 entweichen.

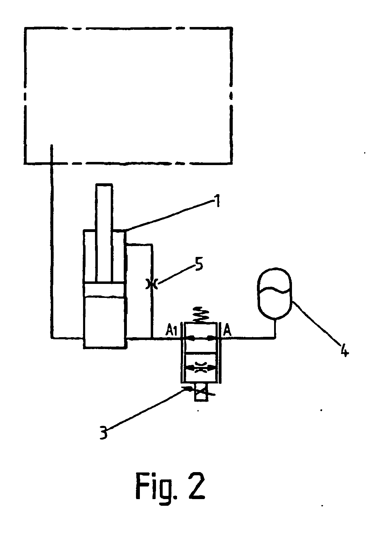

Fig. 2 zeigt eine nicht erfindungsgemäße Anordnung mit einer Zylindereinheit 1, einem Druckspeicher 4 und einer Einrichtung 3, welche als 212-Wege-Ventil ausgestaltet ist. Zwischen Stangenraum und Kolbenraum ist ein statisches Drosselelement 5 angeordnet. Bei Zylinderbewegungen kann mit Hilfe der Einrichtung 3 ein Teilvolumenstrom zwischen Kolbenraum und Speicher 4 variabel eingestellt werden. Der Teilvolumenstrom zwischen Kolbenraum und Stangenraum wird mit dem statischen Drosselelement 5 eingestellt.

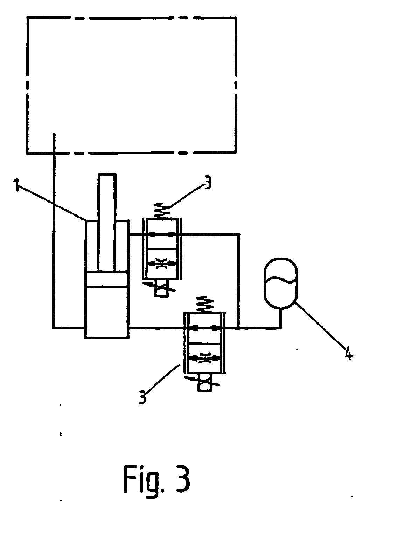

Fig. 3 zeigt eine nicht erfindungsgemäße Anordnung, bei der der Stangenraum als auch der Kolbenraum mit jeweils einer Einrichtung 3 verbunden sind. Die Einrichtungen 3 sind als 2/2-Wege-Ventile ausgestaltet. Bei diesem Ausführungsbeispiel sind die Volumenströme aus dem Kolbenraum bzw. in den Kolbenraum und die Volumenströme aus dem Stangenraum bzw. in den Stangenraum unterschiedlich einstellbar.

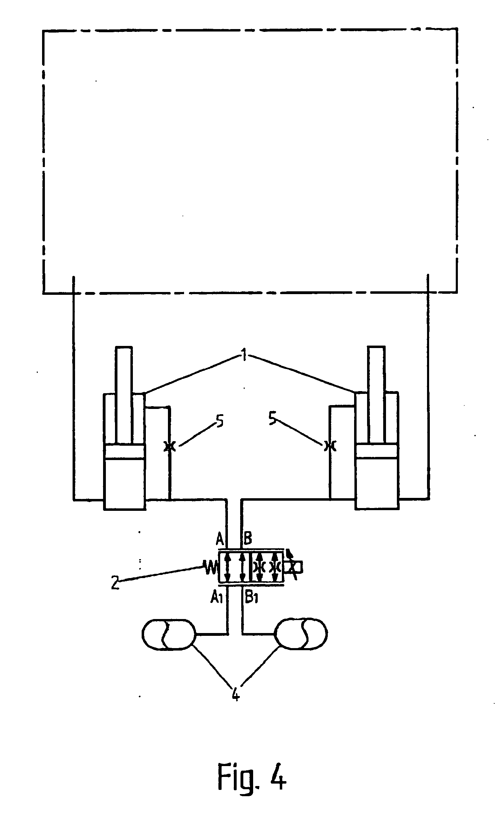

Fig. 4 zeigt eine Anordnung, welche zwei Zylindereinheiten 1 und zwei Druckspeicher 4 umfasst. Zwischen den Zylindereinheiten 1 und den Druckspeichern 4 ist eine einzige Einrichtung 2 angeordnet, welche als 4/2-Wege-Ventil ausgestaltet ist. Darüber hinaus ist zwischen Stangenraum und Kolbenraum einer jeden Zylindereinheit ein statisches Drosselelement 5 angeordnet, über das ein Fluidaustausch zwischen Kolbenraum und Zylinderraum möglich ist. Bei weitergehenden Anforderungen können die statischen Drosselelemente 5 in Analogie zu Fig. 1 und Fig. 3 durch ein oder zwei weitere Ventile ersetzt werden.

In allen Figuren stellt die gestrichelte Struktur eine Einrichtung dar, die der Niveauregulierung dient. Diese ist mit dem Kolbenraum der Zylindereinheit 1 verbunden.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

Abschließend sei ganz besonders hervorgehoben, dass die zuvor rein willkürlich gewählten Ausführungsbeispiele lediglich zur Erörterung der erfindungsgemäßen Lehre dienen, diese jedoch nicht auf diese Ausführungsbeispiele einschränken.

## Patentansprüche

1. Anordnung, umfassend mindestens eine Zylindereinheit (1) und mindestens einen Druckspeicher (4), wobei zwischen Zylindereinheit (1) und Druckspeicher (4) mindestens eine Einrichtung (2, 3) angeordnet ist, durch welche ein Volumen eines Fluids hindurchführbar ist, wobei der Volumenstrom kontinuierlich einstellbar ist, wobei mindestens eine Einrichtung (2, 3) als dynamisches Drosselement ausgestaltet ist oder dynamische Drosselelemente umfasst, welche als Proportionalventile oder Schaltventile ausgestaltet sind, und wobei die Zylindereinheit (1) mindestens einen Zylinder mit einem Stangenraum und einem Kolbenraum umfasst, **dadurch gekennzeichnet, dass** die Proportionalventile oder Schaltventile als 4/2 - Wege - Ventile ausgestaltet sind und der Stangenraum und der Kolbenraum durch eine einzige Einrichtung (2, 3) miteinander und mit dem Druckspeicher (4) fluidleitend verbindbar sind.

2. Kabinenfederung umfassend eine Anordnung in Anspruch 1.

## Claims

1. Arrangement comprising at least one cylinder unit (1) and at least one pressure accumulator (4), with at least one device (2, 3) through which a volume of a fluid can be conveyed being arranged between the cylinder unit (1) and pressure accumulator (4), with the volume flow being continuously adjustable, with at least one device (2, 3) being designed as a dynamic throttle element or comprising dynamic throttle elements which are designed as proportional valves or switching valves, and with the cylinder unit (1) comprising at least one cylinder with a rod chamber and a piston chamber, **characterized in that** the proportional valves or switching valves are designed as 4/2-way valves and the rod chamber and the piston chamber are connected in fluid-conducting fashion to one another and to the pressure accumulator (4) by means of a single device (2, 3).

2. Cab suspension comprising an arrangement according to Claim 1.

## Revendications

1. Agencement, comprenant au moins une unité de cylindre (1) et au moins un accumulateur de pression (4), dans lequel on dispose entre l'unité de cylindre (1) et l'accumulateur de pression (4) au moins un dispositif (2, 3), à travers lequel un volume d'un fluide peut être guidé, le débit volumique pouvant être ajusté en continu, au moins un dispositif (2, 3) étant configuré en tant qu'élément d'étranglement dynamique ou comprenant des éléments d'étranglement dynamiques, qui sont configurés sous forme de soupapes proportionnelles ou de soupapes de commutation, et l'unité de cylindre (1) comprenant au moins un cylindre avec un espace de tige et un espace de piston, **caractérisé en ce que** les soupapes proportionnelles ou les soupapes de commutation sont configurées sous forme de soupapes à 4/2 voies, et l'espace de tige et l'espace de piston peuvent être connectés fluidiquement l'un à l'autre et à l'accumulateur de pression (4) par un dispositif unique (2, 3).

2. Suspension de cabine comprenant un agencement selon la revendication 1.
